Europäisches Patentamt

European Patent Office

Office européen des brevets

(19)

(11) Publication number: **0 126 251**
**B1**

# (12) EUROPEAN PATENT SPECIFICATION

(45) Date of publication of patent specification: **14.09.88**

(51) Int. Cl.⁴: **G 03 B 27/32,** G 03 B 27/62

(21) Application number: **84103734.4**

(22) Date of filing: **04.04.84**

(54) Camera attachment for enabling photographing of transparencies in a slide projector.

(30) Priority: **12.04.83 US 484278**

(43) Date of publication of application:
**28.11.84 Bulletin 84/48**

(45) Publication of the grant of the patent:
**14.09.88 Bulletin 88/37**

(84) Designated Contracting States:
**AT BE CH DE FR GB IT LI NL SE**

(56) References cited:
**DE-A-2 730 494**
**US-A-3 689 148**
**US-A-4 194 834**
**US-A-4 353 640**

(73) Proprietor: **Hurvitz, James S.**
**Santa Monica Medical Plaza Suite 1109 1260**
**15th Street at Arizona**
**Santa Monica California 90404 (US)**

(72) Inventor: **Hurvitz, James S.**
**Santa Monica Medical Plaza Suite 1109 1260**
**15th Street at Arizona**
**Santa Monica California 90404 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to an attachment for connecting a single lens reflex camera to a slide projector to permit photographing of a transparency at the slide station within the projector according to the preamble of claim 1.

Color transparencies or slides are widely used and various devices such as viewers, projectors, etc. are commonly employed for displaying them. In the use of such transparencies the desirability of making copies is frequently encountered. To accommodate this need several special purpose accessories or attachments have been developed. These attachments permit transparencies to be photographed either onto conventional film which can be developed to form duplicate slides or onto self developing film to produce immediate prints of the slides.

An attachment according to the preamble of claim 1 is disclosed in DE—A—2 730 494. This known attachment comprises a tubular member which is directly connected to the camera. The tubular member extends through the light projecting opening of the projector into the projector casing and contains the lens of the camera. The camera is slidably mounted on rails to permit a longitudinal movement of the tubular member in the direction of the optical axis of the lens system.

Another attachment is described and illustrated in the document US—A—3 689 148. This attachment device includes a slide holder and a light source for projecting the image on the slide through a lens system into the interior of the camera. US—A—3 697 175 discloses a slide holder, an electronic flash unit and a light reflecting chamber for back-lighting the slide and projecting the image thereon through a lens into the lens of the camera. Another attachment device is shown in US—A—4 353 640, which device comprises a housing including a screen and film pack in the film plane, a shutter assembly and a light-tight connector for attaching the housing to the lens assembly of a conventional slide projector. The image on the slide is projected through the lens assembly into the housing and onto the film pack.

The prior art devices are expensive and complex in that they provide special purpose attachments which duplicate the function of cameras and/or projectors already available. Either a special purpose accessory is provided to mount the camera or other special purpose accessories are provided to record an image from a conventional slide projector and to project an image from a slide into a conventional camera, respectively.

The object of the invention is to improve an attachment according to the preamble of claim 1 such that it has a simpler construction.

This object is achieved by the features comprised by the characterising portion of claim 1.

The basic idea of the invention is to provide an elongated tubular connector, one end of which is adapted to be attached to the lens mounting boss on the front of a single lens reflex camera, and the other end of which is adapted to be received within the lens receptacle of a projector, and means such as a lens assembly in the connecter intermediate to the two ends for focusing an image from the projector onto the film plane of the camera. One particular feature of the invention is that the elongated tubular connector comprises two sections being interconnected to permit relative rotational movement. This relative movement allows to adjust the position of the camera relative to the transparencies to be photographed.

Advantageous embodiments are claimed by the subclaims.

Embodiments for carrying out the invention are described in detail below with reference to the drawings, in which:—

FIG. 1 is an elevation view of a first embodiment of an attachment according to the present invention;

FIG. 2 is an elevation view, partly in section, of a second embodiment of an attachment according to the present invention; and

FIG. 3 is a plan view of the attachment of FIG. 2 connected between a camera and a slide projector.

Referring now to the drawings:

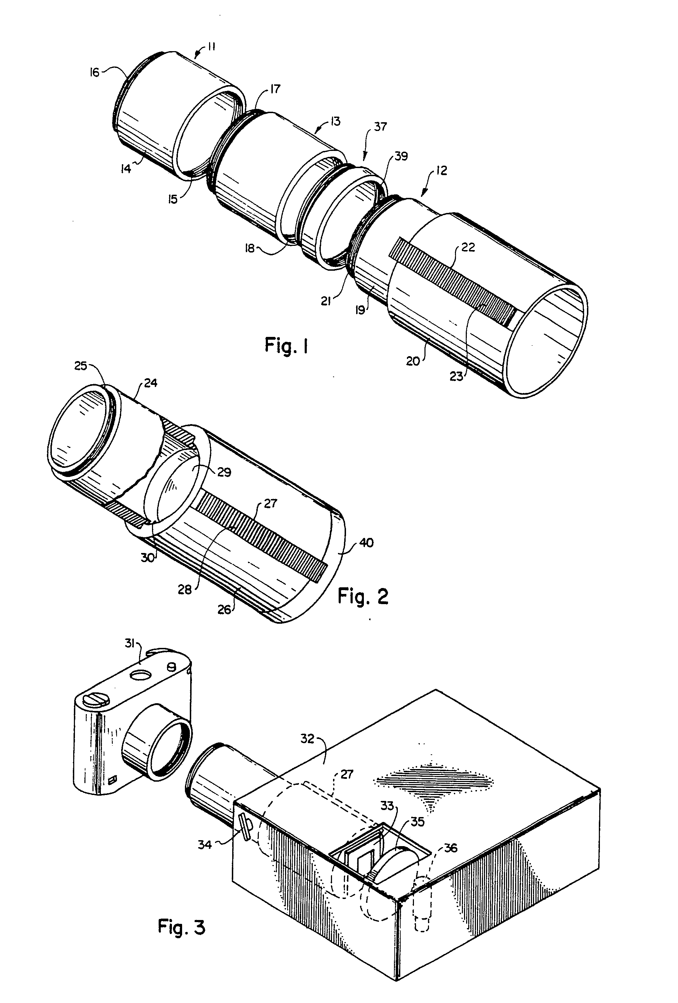

Referring to FIG. 1 of the drawing, the attachment of the present invention is illustrated as including two tubular members 11 and 12 adapted to be connected to a macro lens assembly 13 of a 35 mm camera. The lens assembly includes a 100 mm macro lens or a 50 mm macro lens plus a 2× converter. The member 11 is a conventional lens tube and includes a hollow tubular body 14 with a female mounting boss 15 at one end. The opposite end is provided with a male mounting boss 16. The member 11 is adapted to be connected between the macro lens assembly and the lens mounting boss of a single lens reflex 35 mm camera. The lens assembly in a conventional single lens reflex 35 mm camera is so positioned relative to the camera film plane as to produce a 2:1 conversion of image size. By detaching the macro lens assembly 13 and inserting the lens tube 11 between the camera and the lens assembly, a 1:1 image size will be provided. The mounting boss 16 is received by the lens assembly opening in the mounting boss on the front of the camera.

The lens assembly 13 is then connected to the opposite end of the lens tube 11. The mounting boss 17 on the inner end of the lens assembly 13 is engaged within the mounting boss 15. The lens assembly is provided with an opening at its outer end which is internally threaded as at 18 to receive filters, etc. A factor 8 neutral density filter 37 is fitted to the macro lens by means of external threads 38 received within internal threads 18.

The tubular member 12 is formed of two hollow tubes 19 and 20 interconnected to permit relative rotational movement between them. The free end of tube 19 is externally threaded as at 21 and is adapted to be connected to the factor 8 neutral density filter 37 by threads 21 engaged within internal threads 39 of the filter. Tube 20 is provided with an elongated spline 22 which extends axially of the tube and protrudes radially beyond the exterior surface of the tube. A plurality of generally parallel grooves 23 are formed in the surface of the elongated spline 22 and extend approximately normal to the axis of the tube. The tube 20 is dimensioned to be essentially the same exterior size and shape as the projector lens assembly of a conventional slide projector. The tube 20 is adapted to be received within the lens assembly receptacle of a projector with the spline 22 riding in a matching groove or keyway in the wall of the receptacle and with the grooves 23 meshed with the toothed wheel or gear which is used to adjust the position of the lens assembly within the receptacle.

In the embodiment of FIG. 2 the lens tube, lens assembly, factor 8 neutral density filter and tubular member of FIG. 1 are combined into a unitary structure. The attachment of FIG. 2 includes a tubular section 24 which has a mounting boss at one end as at 25 and is adapted to be received by the lens mounting boss at the opening of a camera. The opposite end of section 24 is joined to a tubular member 26 so as to permit relative rotational movement therebetween. Tubular member 26 is similar to tube 20 of FIG. 1 and is provided with an elongated spline 27 and a series of grooves 28. A 50 mm macro lens 29 is mounted within the tubular section 24 adjacent to the interconnection with tubular member 26. A factor 8 neutral density filter 40 is mounted on the end of the tubular section 26. The interior of section 24 is blocked with an annular support 30 which surrounds and secures the lens 29. In this embodiment the tubular section 24 serves as a lens tube to position the macro lens such that a 1:1 image size ratio is obtained. Tubular member 26 is adapted to be received within the lens assembly receptacle of a slide projector.

FIG. 3 illustrates how the attachment of the present invention connects a single lens reflex 35 mm camera 31 to a slide projector 32 in position to photograph the individual slides at the slide station 33 within the projector. The lens assembly of the camera and the projector lens assembly are both removed, then the lens mounting boss 25 of section 24 is engaged within the mounting boss of the lens assembly opening in the front of the camera. The tubular member 26 is positioned within the lens assembly receptacle of the projector with the grooves 28 in engagement with a gear in the interior of the projector which is rotated by the knob 34 protruding from the projector. Tubular member 26 thus supports the camera in position adjacent the projector. The interconnection between section 24 and tubular member 26 allows the camera to be rotated relative to the projector to align the film with the slides.

A light-diffusing screen 35 made of translucent, but non-transparent, glass or plastic is positioned between the slide station 33 and the projector light source 36.

With the camera in the position shown and with a color transparency in the slide station 33, the camera can be focused by looking through the eyepiece of the camera view finder. Rotation of the knob 34 will move tubular member 26 axially within the projector lens assembly receptacle and adjust the position of the macro lens 29 relative to the slide station to focus the image of the transparency onto the film plane of the camera. Since the light passing through the transparency is very bright, even though diffused, it is necessary to have the neutral density filter in the system and it may be desirable to place a filter over the eyepiece of the view finder in order to see the image clearly for focusing. With the neutral density filter the built in light meter of the camera will function in its effective range and focusing can be accomplished through the eye piece with the naked eye. In this regard the screen 35 diffuses the light to allow the image to be viewed for focusing and also prevents photographing of the light source through the transparency. It is desirable to use tungsten film, such as Ectachrome ASA 160, or a filter for accurate photographing of the image.

With the camera in position and properly focused the slides to be photographed should be aligned with the largest dimension of the transparency parallel to the direction of film movement within the camera. If a carousel type projector is being used, the carousel is mounted on the projector, the camera set on automatic and then shot in rapid succession after advancing each slide to the slide station in turn.

If an automatic focus slide projector is used, then it is only necessary to focus the first slide. Subsequent slides will be focused by the slide projector automatic focus mechanism.

If a standard slide projector is used (i.e., one that does not have the automatic focus feature) it may be necessary to check the focus of each slide and to make focusing adjustments as needed before each slide copy is made.

The present attachment has been described in connection with a 35 mm camera, but it is useable with any single lens reflex camera which has a removable lens assembly.

The attachment of FIG. 1 functions the same as that of FIG. 2 to position the camera on the projector. However, the image can be brought into proper focus by means of the focusing knob on the projector and/or the focusing adjustment on the lens assembly.

**Claims**

1. An attachment for connecting a single lens reflex camera (31) to a slide projector (32) to permit photographing of a transparency (33) at the slide station within the projector (32), said attachment including means (11, 20; 24, 26) adapted to be connected to the camera (31) and also to be connected to the projector (32), comprising a lens (13; 29) for producing a 1:1 image size ratio and focusing the image on the transparency (33) onto the film plane of the camera (31), characterised in that said means comprises a lens tube (11; 24) adapted to be connected to the camera (31) and a tubular member (20; 26) dimensioned to be essentially of the same exterior size and shape as the projector lens assembly of said slide projector (32) and adapted to be received within the lens assembly receptacle of the projector (32), said lens tube (11; 24) and said tubular member (20; 26) being interconnected to permit relative rotational movement, said tubular member (20; 26) is adapted to co-operate with the lens focusing mechanism of said slide projector (32) for focusing the image of the transparency onto the film plane of the camera (31).

2. The attachment according to claim 1, characterised in that it further comprises a neutral density filter (37; 40) and a macro lens assembly (13; 29) connected in series with said lens tube (11; 24), said neutral density filter (37; 40), and said tubular member (20; 26).

3. The attachment according to claim 2, characterised in that said macro lens assembly (13) is connected between the lens tube (11) and the tubular member (20).

4. The attachment according to claim 1, characterised in that it comprises a light diffusing screen (35) adapted to be placed in the projector (32) between the transparency (33) and the light source (36).

5. The attachment according to claim 1, characterised in that a macro lens assembly (13) is connected to said lens tube (11), and a neutral density filter (37) is connected to the macro lens assembly (13) and said tubular member (20) is connected to said neutral density filter (37).

6. The attachment according to claim 5, characterised in that said neutral density filter (37) is connected to a hollow tube (12) interconnected to the tubular member (20) to permit relative rotational movement.

7. The attachment according to claim 1, characterised in that a macro lens assembly (29) is mounted in the lens tube (24), and a neutral density filter (40) is connected to the tubular member (26).

8. The attachment according to claim 1, characterised in that said tubular member (20; 26) is provided with an elongated radially protruding spline (22; 27) adapted to be received within a groove in the receptacle, and a series of grooves on said spline (22; 27) adapted to mesh with the lens focusing gear on said projector (32).

**Patentansprüche**

1. Vorsatzteil zur Verbindung einer einäugigen Spiegelreflexkamera (31) mit einem Diaprojektor (32), um das Fotografieren eines Diapositivs (33) in der Diapositivstation in dem Projektor (32) zu ermöglichen, wobei der genannte Vorsatzteil Mittel (11, 20; 24, 26) aufweist, die an der Kamera (31) und auch an dem Projektor (32) befestigt werden können, sowie eine Linsenanordnung (13; 29) zur Erzeugung eines Bildgrößenverhältnisses von 1:1 und zur Scharfeinstellung des Bildes auf dem Diapositiv (33) in der Bildebene der Kamera (31), dadurch gekennzeichnet, daß die genannten Mittel einen Vorsatztubus (11; 24), welcher mit der Kamera (31) verbindbar ist, und ein Rohrglied (20; 26) aufweisen, welches derart bemessen ist, daß es im wesentlichen die gleiche äußere Größe und Form wie das Projektorobjektiv des genannten Diaprojektors (32) aufweist und von der Aufnahme für das Objektiv des Projektors (32) aufnehmbar ist, wobei der genannte Vorsatztubus (11; 24) und das genannte Rohrglied (20; 26) für eine relative Drehbewegung miteinander verbunden sind und das genannte Rohrglied (20; 26) mit dem Objektivscharfeinstellmechanismus des genannten Diaprojektors (32) zusammenarbeiten kann, um das Bild des Diapositivs scharf in der Filmebene der Kamera (31) einzustellen.

2. Vorsatzteil nach Anspruch 1, dadurch gekennzeichnet, daß er ferner ein neutrales Dichtefilter (37; 40) und ein Makroobjektiv (13; 29) umfaßt, das in Reihe mit dem genannten Vorsatztubus (11; 24), dem genannten neutralen Dichtefilter (37; 40) und dem genannten Rohrglied (20; 26) verbunden ist.

3. Vorsatzteil nach Anspruch 2, dadurch gekennzeichnet, daß das Makroobjektiv (13) zwischen dem Vorsatztubus (11) und dem Rohrglied (20) verbunden ist.

4. Vorsatzteil nach Anspruch 1, dadurch gekennzeichnet, daß er einen Lichtstreuschirm (35) aufweist, der in dem Projektor (32) zwischen dem Diapositiv (33) und der Lichtquelle (36) angeordnet werden kann.

5. Vorsatzteil nach Anspruch 1, dadurch gekennzeichnet, daß das Makroobjektiv (13) mit dem genannten Vorsatztubus (11) verbunden ist und ein neutrales Dichtefilter (37) mit dem Makroobjektiv (13) verbunden ist und das genannte Rohrglied (20) mit dem genannten neutralen Dichtefilter (37) verbunden ist.

6. Vorsatzteil nach Anspruch 5, dadurch gekennzeichnet, daß das genannte neutrale Dichtefilter (37) mit einem hohlen Rohr (12) verbunden ist, welches mit dem Rohrglied (20) verbunden ist, um eine relative Drehbewegung zu ermöglichen.

7. Vorsatzteil nach Anspruch 1, dadurch gekennzeichnet, daß ein Makroobjektiv (29) in dem Vorsatztubus (24) befestigt und ein neutrales Dichtefilter (40) mit dem Rohrglied (26) verbunden ist.

8. Vorsatzteil nach Anspruch 1, dadurch gekennzeichnet, daß das genannte Rohrglied (20; 26) mit einer länglichen, radial vorstehenden Leiste (22; 27) versehen ist, die von einer Nut in der Aufnahme aufnehmbar ist, und eine Reihe von Nuten in der genannten Leiste (22; 27) mit dem Objektivscharfeinstellzahnrad in dem genannten Projektor (32) kämmen kann.

**Revendications**

1. Accessoire destiné à relier un appareil photographique (31) réflex à un seul objectif à un projecteur (32) de diapositives, en vue de permettre la photographie d'une vue transparente (33) placée sur le support de diapositives situé dans le projecteur (32), ledit accessoire comportant des moyens (11, 20, 24, 26) aptes à être reliés à l'appareil photographique (31) et également aptes à être reliés au projecteur (32) comprenant un objectif (13, 29) destiné à créer un rapport de dimension d'image de 1/1 et à mettre au point l'image de la vue transparente (33) sur le plan de film de l'appareil photographique (31) caractérisé en ce que ledit moyen comprend un tube à objectif (11, 24) apte à être relié à l'appareil photographique (31) et un organe tubulaire (20, 26) dimensionné de façon à avoir sensiblement la même dimension et la même forme extérieure que l'objectif du projecteur dudit projecteur (32) de diapositives et apte à se loger dans le réceptacle d'objectif du projecteur (32), ledit tube à objectif (11, 24) et ledit organe tubulaire (20, 26) étant reliés entre eux de façon à permettre un mouvement de rotation relatif, ledit organe tubulaire (20, 26) étant apte à coopérer avec le mécanisme de mise au point d'objectif dudit projecteur (32) de diapositives en vue de la mise au point de l'image de la vue transparente sur le plan de film de l'appareil photographique (31).

2. Accessoire selon la revendication 1, caractérisé en ce qu'il comprend en outre un filtre de densité neutre (37, 40) et un objectif macro (13, 29) reliés en série audit tube à objectif, audit filtre de densité neutre (37, 40) et audit organe tubulaire (20, 26).

3. Accessoire selon la revendication 2, caractérisé en ce que ledit objectif macro (13) est monté entre le tube (11) à objectif et l'organe tubulaire (20).

4. Accessoire selon la revendication 1, caractérisé en ce qu'il comprend un écran diffuseur de lumière (35) apte à être placé dans le projecteur (32) entre la vue transparente (33) et la source de lumière (36).

5. Accessoire selon la revendication 1, caractérisé en ce qu'un objectif macro (13) est relié audit tube à objectif (11), et qu'un filtre (37) de densité neutre est relié à l'objectif macro (13) et que ledit organe tubulaire (20) est relié audit filtre de densité neutre (37).

6. Accessoire selon la revendication 5, caractérisé en ce que ledit filtre de densité neutre (37) est relié à un tube creux (12) relié à l'organe tubulaire (20) de façon à permettre un mouvement de rotation relatif.

7. Accessoire selon la revendication 1, caractérisé en ce qu'un objectif macro (20) est monté dans le tube à objectif (24) et qu'un filtre de densité neutre (40) est relié à l'organe tubulaire (26).

8. Accessoire selon la revendication 1, caractérisé en ce que ledit organe tubulaire (20, 26) est muni d'une languette oblongue (22, 27) faisant saillie axialement, apte à se loger dans une gorge réceptacle, et d'une série de gorges situées sur ladite languette (22, 27) aptes à se mettre en prise avec le pignon de mise au point dudit projecteur (32).

Fig. 1

Fig. 2

Fig. 3